# EUROPEAN PATENT SPECIFICATION

(11) **EP 0 639 152 B1**
(45) Date of publication and mention of the grant of the patent: **16.07.1997**
(21) Application number: 93911922.8
(22) Date of filing: 06.05.1993
(51) Int. Cl.: B65D 88/74, A01K 1/02

(54) **VENTILATION SYSTEMS**
VENTILATIONSSYSTEM
SYSTEMES DE VENTILATION

(30) Priority: 06.05.1992 GB 9209717
(43) Date of publication of application: 22.02.1995
(73) Proprietor: HOUGHTON, Michael John, Milnthorpe, Cumbria LA7 7AD (GB)
(72) Inventor: HOUGHTON, Michael John, Milnthorpe, Cumbria LA7 7AD (GB)
(74) Representative: Neill, Alastair William
(86) International application number: GB9300933
(87) International publication number: WO9322226

(56) References cited:
- DE-A- 2 001 220
- DE-C- 909 989
- GB-A- 2 046 710

## Description

The invention relates to ventilation systems, in particular for movable structures, such as mobile livestock containers.

Livestock containers are usually provided with side vents which may be opened to control the airflow. The vents, known from the prior art are generally independent lengths of a material such as wood, running horizontally along the length of the container. These vents are opened or closed by moving along the vehicle and manually adjusting each one individually by moving them from a fully closed position to fully open, there being no provision for any intermediate setting.

In addition, livestock containers are conventionally provided with internal guide rails to prevent the animals from pushing any parts of their bodies out of the vent apertures when the vents are open. Guard rails are typically horizontal bars, the maximum spacing between each bar being determined by official regulations.

German Patent DE 909,989 discloses a ventilation system comprising a number of panels which are moveable between a first open configuration and a second closed configuration by means of a common actuator. Movement of the actuator in a first direction opens the panels and movement in a second direction closes the panels.

It is an object of the present invention to provide an improved ventilation system.

The invention provides a ventilation system in combination with a moveable structure, the combined system comprising a support structure having a plurality of elongate panels interconnectedly arranged for pivotal movement as a group, which panels, when the ventilation system is installed in a side panel of said moveable structure, extend substantially vertically and are each pivotable by means of one or more pivot members about a substantially vertical axis and are thereby moveable between a first, a second and a third position, the second position being intermediate said first and third positions, the ventilation system being characterised in that in said first position a forward facing passageway is formed between adjacent panels and forward motion of the moveable structure causes and promotes airflow through said passageway into an interior region of the moveable structure, in said second position said passageway extends substantially at right angles to the forward motion direction of the moveable structure so that viewing access between adjacent panels to the interior is substantially unimpeded, in said third position adjacent panels cooperate so as to cut off or restrict air passage therebetween and, in positions intermediate said second and third positions, the passageway formed between adjacent panels is rearward facing.

Preferably, the movable structure is a mobile livestock container.

The elongate panels are preferably interconnected by an actuating member for pivotal movement as a group.

The actuating member may have a plurality of guide members, one for each panel, each guide member being in sliding engagement with the associated panel.

The actuating member may be provided with an operating member, for example a handle.

The position of each panel may be infinitely variable between a fully open and a fully closed position.

The spacing and positioning of the elongate panels may be such that animals are unable to push any parts of their bodies between the elongate panels, thus rendering horizontal guard rails unnecessary.

Each of the panels may be removable from the support structure.

Each panel may be removable by means of an axially movable pivot member.

The movable pivot member may be biased into a projecting position, but be movable against the bias into a retracted position, to free the panel.

The ventilation system may include remote actuating means operable from a vehicle cab.

There may be a temperature sensor provided within the interior of the movable structure, associated with a control means for the automatic regulation of the position of the panels.

The invention includes a motorised vehicle for the transportation of livestock, equipped with a ventilation system as described above.

Some or all of the novel features described above may be usefully applied to the prior art arrangement, having horizontal panels.

By way of example, a specific embodiment of the invention will now be described with reference to the accompanying drawings, in which :-
Figures 1 to 3 show an embodiment of the invention in three different operating states;
Figure 4(a) to 4(c) are schematic plan views of one of the panels of the embodiment of Figures 1 to 3; and
Figures 5a and 5b show further details of one of the panels.

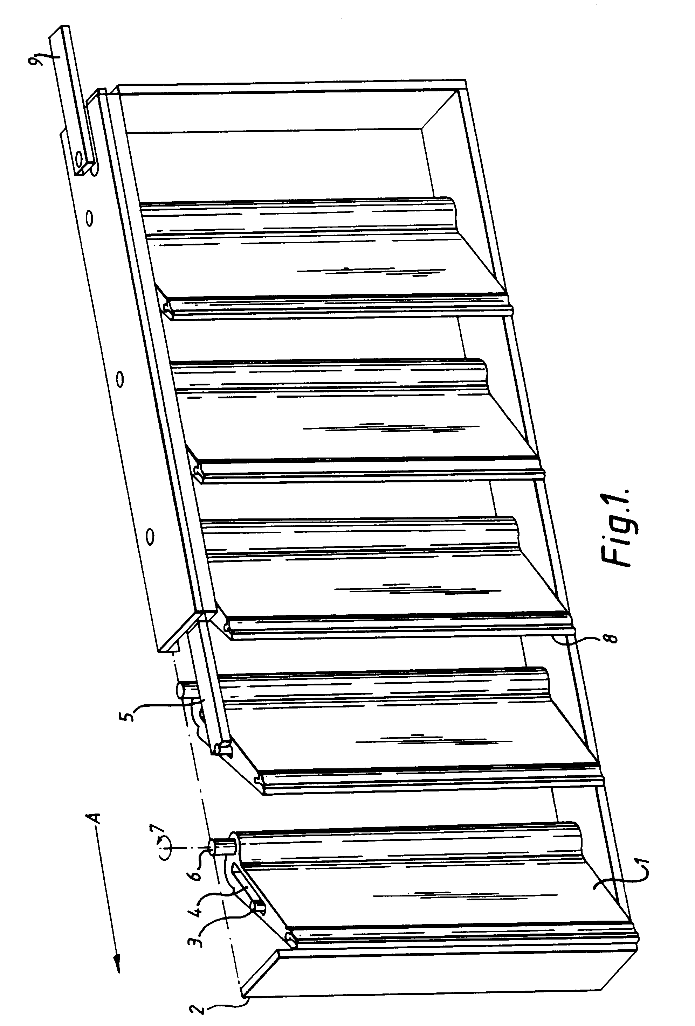

Referring firstly to Figures 1 to 3, it can be seen that the ventilation system of the present invention incorporates a number of elongate louvre panels 1 arranged vertically within a rectangular frame structure 2. The frame structure 2 is designed to be positioned within the elongate side panels of a mobile livestock container.

Each panel 1 is connected to the frame by a pivot mechanism 6 (to be described in more detail later) which permits the vent to rotate about a vertical axis 7.

Movement of the panels from one position to another is achieved by means of a handle 9 connected to an actuating rod 5, common to all the panels within the frame. Pegs 3 project downwardly from the rod 5 at intervals. Each panel has a guide channel 4 formed in its uppermost surface and one peg 3 projects into each channel 4. Horizontal movement of the actuating rod 5 from left to right, as viewed in Figures 1 to 3, causes the pegs 3 to slide within the guide channels 4 which brings about a corresponding rotational movement of the panels around pivot points 6. Therefore, as can be seen from Figures 1 to 3, manipulation of the handle 9 enables an infinitely variable adjustment of the ventilation system.

Figure 1 shows the ventilation system in the fully open maximum airflow position. Forward motion of the container, represented by arrow "A" will tend to force air into the livestock container in proportion to the forward velocity.

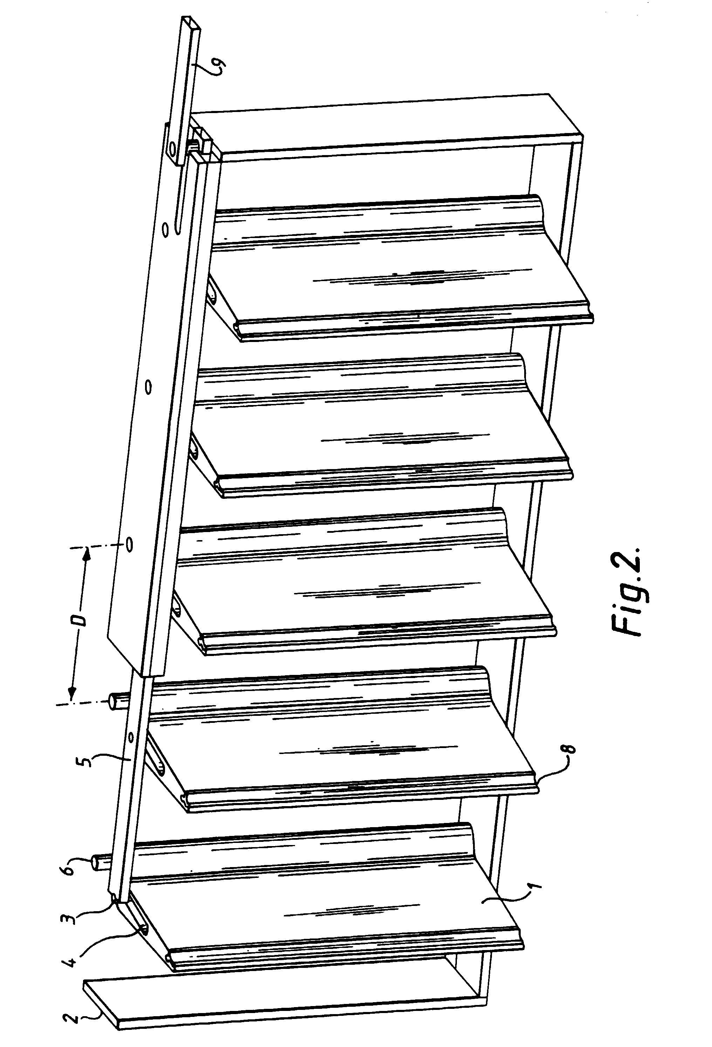

Figure 2 illustrates the 90° position. This position affords maximum viewing access to the interior of the livestock container for inspection of the animals.

The longitudinal spacing D, of the panels is limited to a maximum of approximately 100 millimetres. By restricting the spacing in this manner, animals being transported within the container are unable to push any parts of their bodies between the panels. Thus, the necessity for guard rails is avoided and regulations complied with, without the need for additional expense.

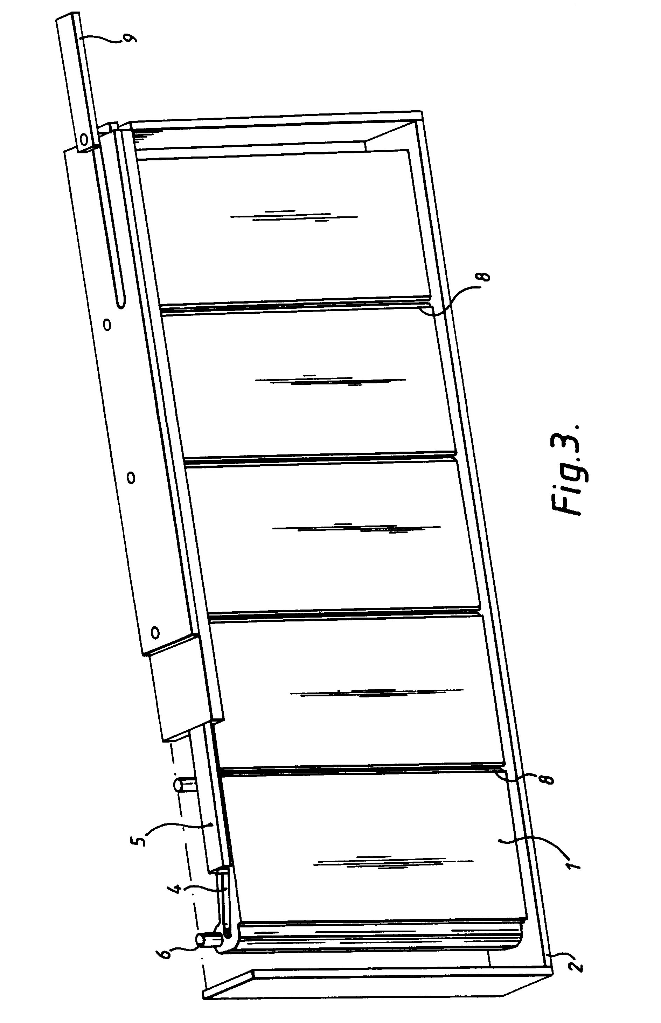

Figure 3 shows the panels in their fully closed position. This configuration enables maximum protection from adverse weather conditions. The panels are each provided with a rubber seal 8 of an appropriate profile such that closure of the vents will cause compression of the seal 8 against the next panel in the line, thus forming an effective seal.

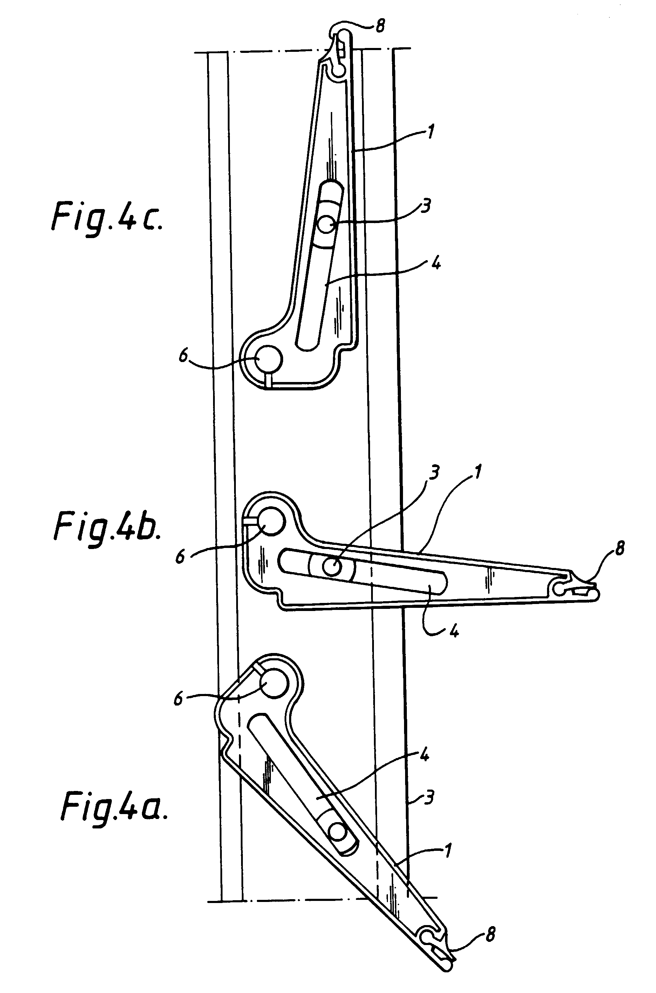

Figures 4(a), (b) and (c) are schematic plan views of the three operating positions of Figures 1 to 3 respectively and show more clearly the movement of each peg 3 within the associated guide channel 4, as explained previously.

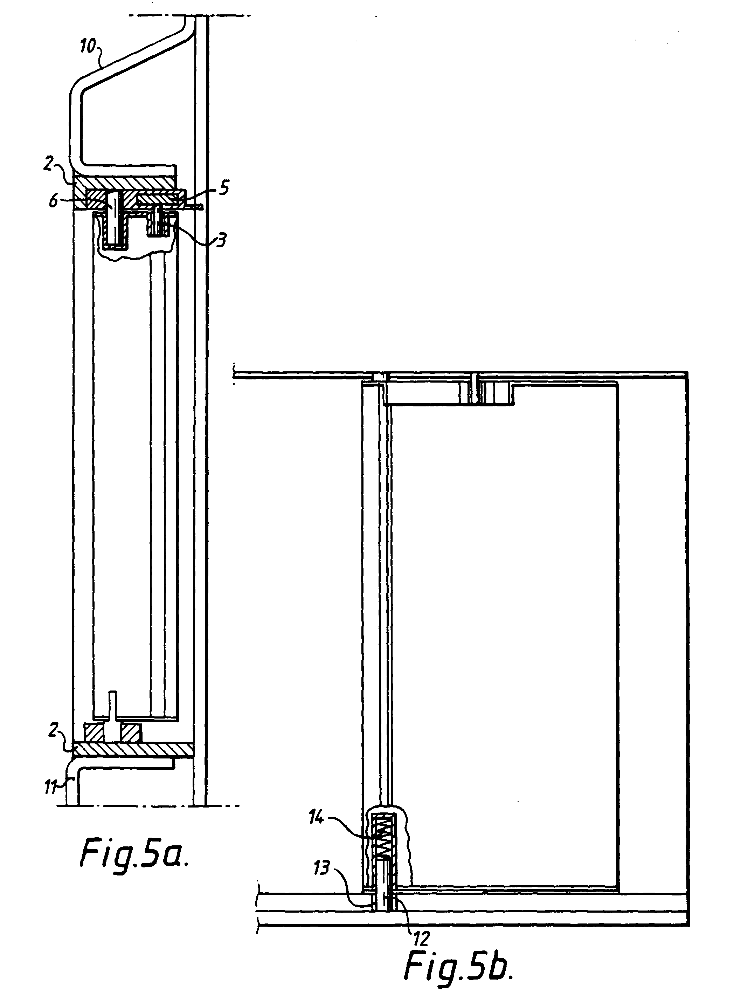

Figure 5(a) is a cross-sectional front elevation of one of the panels in its closed position. The frame 2 of the system is held in place by top and bottom brackets 10 and 11, which may be of an identical construction. The brackets are joined to the frame and the walls of the container by conventional fixing means (not shown) and cause the ventilation mechanism to be slightly recessed within the body of the container.

Figure 5(b) is a schematic front view of the panels in their closed position showing details of the lower portion of the pivoting mechanism.

A bottom pivot 12 is shown which, in the preferred embodiment, is held in position within a recess or channel 13 by a spring 14. Compression of the spring 14 enables the panel 1 to be removed. In this manner all the individual panels are detachable, so that the side inspection and access doors required by current legislation may be unnecessary and could be replaced by simply removing some of the panels.

In addition to the above features preferred embodiments of the invention include remote actuation means (not shown) so that the position of the panels may be adjusted from a remote position, such as, from within the driving cab of a vehicle. The adjustment may be manual or alternatively, automatic adjustment may be provided for.

For example, temperature sensors (not shown), may be located within the interior of the livestock container, associated control means (not shown) automatically adjusting the angle of the panels to maintain a given temperature within the container.

## Claims

1. A ventilation system in combination with a moveable structure, the combined system comprising a support structure (2) having a plurality of elongate panels (1) interconnectedly arranged for pivotal movement as a group, which panels, when the ventilation system is installed in a side panel of said moveable structure, extend substantially vertically and are each pivotable by means of one or more pivot members (12) about a substantially vertical axis (6) and are thereby moveable between a first, a second and a third position, the second position being intermediate said first and third positions, the ventilation system being characterised in that in said first position a forward facing passageway is formed between adjacent panels and forward motion of the moveable structure causes and promotes airflow through said passageway into an interior region of the moveable structure, in said second position said passageway extends substantially at right angles to the forward motion direction of the moveable structure so that viewing access between adjacent panels to the interior is substantially unimpeded, in said third position adjacent panels cooperate so as to cut off or restrict air passage therebetween and, in positions intermediate said second and third positions, the passageway formed between adjacent panels is rearward facing.

2. A system according to Claim 1, characterised in that the movable structure is a mobile livestock container.

3. A system according to Claim 1 or 2, characterised in that the elongate panels (11) are interconnected by an actuating member (15) for said pivotal movement as a group.

4. A system according to Claim 3 characterised in that the actuating member has a plurality of guide members (3), one for each panel (1), each guide member (3) being in sliding engagement with the associated panel.

5. A system according to any of the preceding Claims characterised in that the position of each panel is infinitely variable between a fully open and a fully closed position.

6. A system according to any one of the preceding claims, characterised in that each panel is removable from the support structure (2).

7. A system according to Claim 6, further characterised in that each panel (1) is removable by means of an axially movable pivot member (12).

8. A system according to Claim 7, further characterised in that the movable pivot member (12) can be biased into a projecting position, but is movable against the bias into a retracted position, to free the panel (1).

9. A system according to any one of the preceding claims characterised in that remote actuating means are provided operable from inside a vehicle cab.

10. A system according to any one of the preceding claims characterised in that a temperature sensor is provided within the interior of the movable structure, associated with a control means for the automatic regulation of the position of the panels.

11. A motorised vehicle for transportation of livestock characterised in that the vehicle is equipped with a ventilation system according to any one of the preceding Claims.

## Patentansprüche

1. Belüftungssystem in Kombination mit einer beweglichen Struktur, wobei das kombinierte System eine Aufnahmestruktur (2) mit einer Vielzahl länglicher Platten (1) umfaßt, die, miteinander verbunden, als Gruppe schwenkbar angeordnet sind, wobei sich die Platten, wenn das Belüftungssystem in einer Seitenverkleidung der beweglichen Struktur installiert ist, im wesentlichen vertikal erstrecken und jeweils mit einem oder mehreren Schwenkelementen (12) um eine im wesentlichen vertikale Achse (6) geschwenkt werden und sich so zwischen einer ersten, einer zweiten und einer dritten Position bewegen können, wobei die zweite Position zwischen der ersten und der dritten Position liegt, wobei das Belüftungssystem **dadurch gekennzeichnet** ist, daß in der ersten Position eine nach vorn gerichteter Durchlaß zwischen benachbarten Platten hergestellt wird und Vorwärtsbewegung der beweglichen Struktur Luftstrom über den Durchlaß in einen Innenbereich der beweglichen Struktur hinein verursacht und fördert, sich der Durchlaß in der zweiten Position im wesentlichen im rechten Winkel zu der Vorwärtsbewegungsrichtung der beweglichen Struktur erstreckt, so daß Sichtzugang zum Innenraum zwischen benachbarten Platten im wesentlichen nicht behindert wird, in der dritten Position benachbarte Platten so zusammenwirken, daß sie Luftdurchlaß dazwischen unterbrechen oder einschränken, und in Positionen zwischen der zweiten und der dritten Position der Durchlaß, der zwischen benachbarten Platten besteht, nach hinten gerichtet ist.

2. System nach Anspruch 1, **dadurch gekennzeichnet**, daß die bewegliche Struktur ein mobiler Viehcontainer ist.

3. System nach Anspruch 1 oder 2, **dadurch gekennzeichnet,** daß die länglichen Platten (11) durch ein Betätigungselement (15) für die Schwenkbewegung als Gruppe miteinander verbunden sind.

4. System nach Anspruch 3, **dadurch gekennzeichnet,** daß das Betätigungselement eine Vielzahl von Führungselementen (3), d.h. eines für jede Platte (1), aufweist, wobei jedes Führungselement (3) in Gleitkontakt mit der dazugehörigen Platte ist.

5. System nach einem der vorangehenden Ansprüche, **dadurch gekennzeichnet**, daß die Position jeder Platte zwischen einer vollständig offenen und einer vollständig geschlossenen Position stufenlos verändert werden kann.

6. System nach einem der vorangehenden Ansprüche, **dadurch gekennzeichnet,** daß jede Platte aus der Aufnahmestruktur (2) gelöst werden kann.

7. System nach Anspruch 6, des weiteren **dadurch gekennzeichnet,** daß jede Platte (1) mittels eines axial beweglichen Schwenkelementes (12) gelöst werden kann.

8. System nach Anspruch 7, weiterhin **dadurch gekennzeichnet,** daß das bewegliche Schwenkelement (12) in eine vorstehende Position gedrückt werden kann, jedoch gegen den Druck in eine eingezogene Position bewegt werden kann, um die Platte (1) zu lösen.

9. System nach einem der vorangehenden Ansprüche, **dadurch gekennzeichnet,** daß Fembetätigungseinrichtungen vorhanden sind, die vom Inneren eines Fahrzeugführerhauses aus betätigt werden können.

10. System nach einem der vorangehenden Ansprüche, **dadurch gekennzeichnet,** daß ein Temperatursensor im Inneren der beweglichen Struktur vorhanden ist, der mit einer Steuereinrichtung zum automatischen Regulieren der Position der Platten verbunden ist.

11. Motorisiertes Fahrzeug zum Transport von Vieh, **dadurch gekennzeichnet**, daß das Fahrzeug mit einem Belüftungsystem nach einem der vorangehenden Ansprüche ausgestattet ist.

## Revendications

1. Système de ventilation en combinaison avec une structure mobile, le système combiné comprenant une structure de support (2) ayant plusieurs panneaux allongés (1) disposés de manière interconnectée afin d'effectuer un mouvement de pivotement comme un groupe, ces panneaux, lorsque le système de ventilation est installé dans un panneau latéral de ladite structure mobile, s'étendant sensiblement verticalement et étant chacun apte à pivoter au moyen d'un ou de plusieurs éléments formant pivot (12) autour d'un axe sensiblement vertical (6), ce qui leur permet d'être déplaçables entre une première, une deuxième et une troisième positions, la deuxième position étant intermédiaire entre lesdites première et troisième positions, le système de ventilation étant caractérisé en ce que dans ladite première position, un passage orienté vers l'avant est formé entre des panneaux adjacents et un déplacement de la structure mobile vers l'avant provoque et facilite un écoulement d'air par l'intermédiaire dudit passage en direction d'une zone intérieure de la structure mobile, en ce que, dans ladite deuxième position, ledit passage s'étend sensiblement à angle droit par rapport à la direction du déplacement de la structure mobile vers l'avant afin que l'on puisse observer, sensiblement sans gène, l'intérieur en regardant entre des panneaux adjacents, en ce que, dans ladite troisième position, des panneaux adjacents coopèrent pour arrêter ou limiter le passage de l'air entre eux et en ce que, dans des positions intermédiaires entre lesdites deuxième et troisième positions, le passage formé entre les panneaux adjacents est orienté vers l'arrière.

2. Système selon la revendication 1, caractérisé en ce que la structure mobile est un conteneur mobile de bétail.

3. Système selon la revendication 1 ou 2, caractérisé en ce que les panneaux allongés (11) sont interconnectés par un élément d'actionnement (15) pour effectuer ledit mouvement de pivotement comme un groupe.

4. Système selon la revendication 3, caractérisé en ce que l'élément d'actionnement a plusieurs éléments de guidage (3), un pour chaque panneau (1), chaque élément de guidage (3) étant en contact de coulissement avec le panneau associé.

5. Système selon l'une quelconque des revendications précédentes, caractérisé en ce que la position de chaque panneau est infiniment variable entre une position complètement ouverte et une position complètement fermée.

6. Système selon l'une quelconque des revendications précédentes, caractérisé en ce que chaque panneau peut être retiré de la structure de support (2).

7. Système selon la revendication 6, caractérisé en outre en ce que chaque panneau (1) peut être retiré au moyen d'un élément formant pivot (12) axialement déplaçable.

8. Système selon la revendication 7, caractérisé en outre en ce que l'élément mobile formant pivot (12) peut être sollicité pour prendre une position saillante, mais en ce qu'il est déplaçable, de manière antagoniste à la sollicitation, pour prendre une position rentrée, afin de libérer le panneau (1).

9. Système selon l'une quelconque des revendications précédentes, caractérisé en ce que des moyens d'actionnement à distance sont prévus, qui peuvent être commandés depuis d'intérieur d'une cabine de véhicule.

10. Système selon l'une quelconque des revendications précédentes, caractérisé en ce qu'un capteur de température est prévu à l'intérieur de la structure mobile, en association avec un moyen de commande pour la régulation automatique de la position des panneaux.

11. Véhicule à moteur pour le transport de bétail, caractérisé en ce que le véhicule est équipé d'un système de ventilation selon l'une quelconque des revendications précédentes.
